# EUROPEAN PATENT SPECIFICATION

(11) **EP 2 524 843 B1**
(45) Date of publication and mention of the grant of the patent: **19.11.2014**
(21) Application number: 11166937.0
(22) Date of filing: 20.05.2011
(51) Int. Cl.: B60R 21/36

(54) **A pedestrian air-bag retraction mechanism**
Rückholvorrichtung für ein Fussgängerairbag
Mécanisme de rétraction d'un airbag piéton

(43) Date of publication of application: 21.11.2012
(73) Proprietor: Autoliv Development AB, 447 83 Vårgårda (SE)
(72) Inventor: Haglund, Lennart, 447 32 Vargarda (SE); Rydsmo, Erik, 466 95 Sollebrunn (SE); Svantesson, Anders, 448 50 Tollered (SE)
(74) Representative: Beattie, Alex Thomas Stewart

(56) References cited:
- EP-A1- 1 350 692
- EP-A1- 1 394 001
- EP-A1- 2 338 745
- DE-A1- 10 138 449
- DE-A1- 19 837 749
- US-B1- 6 406 055

## Description

THIS INVENTION relates to a safety device for a vehicle, and in particular relates to an arrangement for retracting an air-bag once it has been inflated.

It has been previously proposed to provide a pedestrian air-bag to protect a pedestrian in the event of a vehicle being involved in a substantially head-on collision with the pedestrian. The pedestrian air-bag generally inflates to cover at least the lower portion of the windscreen and the left and right A-pillars of the vehicle, to cushion the impact of the pedestrian striking these components.

While pedestrian air-bags of this type can be effective in preventing or reducing pedestrian injuries, one problem associated with air-bags of this type is that the air-bag, when inflated, can obscure some or all of the driver's view of the road ahead of the vehicle. It is therefore useful to improve the driver's visibility through the windscreen once the air-bag is no longer needed, particularly if the vehicle has not yet reached a halt. It is also generally desirable, once the accident or crash event is finished, for the air-bag to be removed from the windscreen so that the vehicle can be driven to a garage for the pedestrian air-bag to be completely removed and/or reset.

Aside from pedestrian protection air-bags, it can also be desirable to retract other air-bags, such as internal driver/passenger protection air-bags, after they have been deployed.

EP-2338745A (a document according to Art. 54(3) EPC) discloses a safety arrangement for a vehicle, comprising:
an air-bag module having an inflatable air-bag, the air-bag being configured to occupy an initial position following inflation thereof;
an inflator adapted to deliver gas into the interior of the air-bag to inflate the air-bag; an active venting arrangement movable between a closed configuration and an open configuration, and which, in the open configuration, opens a gas flow passage between the interior of the air-bag and the exterior of the air-bag, thus allowing gas to escape from the air- bag;
a moving arrangement adapted to move the air-bag from its initial position following inflation of the air-bag; and
a driving arrangement, which is connected to the active venting arrangement and to the moving arrangement and which, when triggered, moves the active venting arrangement from the closed position to the open position and also triggers the moving arrangement to remove the air-bag from its initial position, wherein the driving arrangement comprises a source of pressurised gas.

It is an object of the present invention to provide an improved air-bag retraction mechanism.

Accordingly, one aspect of the present invention provides a safety arrangement for a vehicle, comprising: an air-bag module having an inflatable air-bag, the air-bag being configured to occupy an initial position following inflation thereof; an inflator adapted to deliver gas into the interior of the airbag to inflate the air-bag; an active venting arrangement movable between a closed configuration and an open configuration, and which, in the open configuration, opens a gas flow passage between the interior of the air-bag and the exterior of the air-bag, thus allowing gas to escape from the air-bag; a moving arrangement adapted to move the air-bag from its initial position following inflation of the air-bag; and a driving arrangement, which is connected to the active venting arrangement and to the moving arrangement and which, when triggered, moves the active venting arrangement from the closed position to the open position and also triggers the moving arrangement to remove the air-bag from its initial position, wherein the driving arrangement comprises a source of pressurised gas, and wherein the active venting arrangement and the moving arrangement are connected to receive gas from the source of pressurised gas.

Conveniently, the active venting arrangement comprises a component which is driven from an initial position to a final position by the pressurised gas, to move the active venting arrangement from the closed configuration to the open configuration.

Preferably, the moving arrangement comprises one or more flexible elements which are attached to the air-bag.

Conveniently, the or each flexible element is drawn inwardly into another component of the moving arrangement when the moving arrangement is activated.

Advantageously, the air-bag is a pedestrian protection air-bag.

Preferably, the air-bag is a driver or passenger protection air-bag.

Conveniently, the safety arrangement further comprises a control unit which is adapted to generate a first trigger signal at a first time to inflate the air-bag, and a second trigger signal at a second time to trigger the driving arrangement, the second time being later than the first time.

Advantageously, the first trigger signal is generated if it is determined that an impact or accident is occurring or is likely to occur.

Preferably, the second trigger signal is generated when it is determined that the air-bag is no longer required.

Conveniently, the second trigger signal is generated at a predetermined length of time after the first trigger signal.

Advantageously, the driving arrangement comprises a hydraulic, solenoid or pyrotechnic system.

Another aspect of the present invention provides a vehicle containing a safety arrangement according to any of the above.

In order that the present invention may be more readily understood, embodiments thereof will now be described, by way of example, with reference to the accompanying drawings, in which:
Figure 1 is a schematic view of components of an air-bag arrangement embodying the present invention;
Figure 2 shows a retractor suitable for use with the air-bag arrangement of figure 1; and
Figures 3 and 4 show the air-bag arrangement of figure 1 in various stages of use.

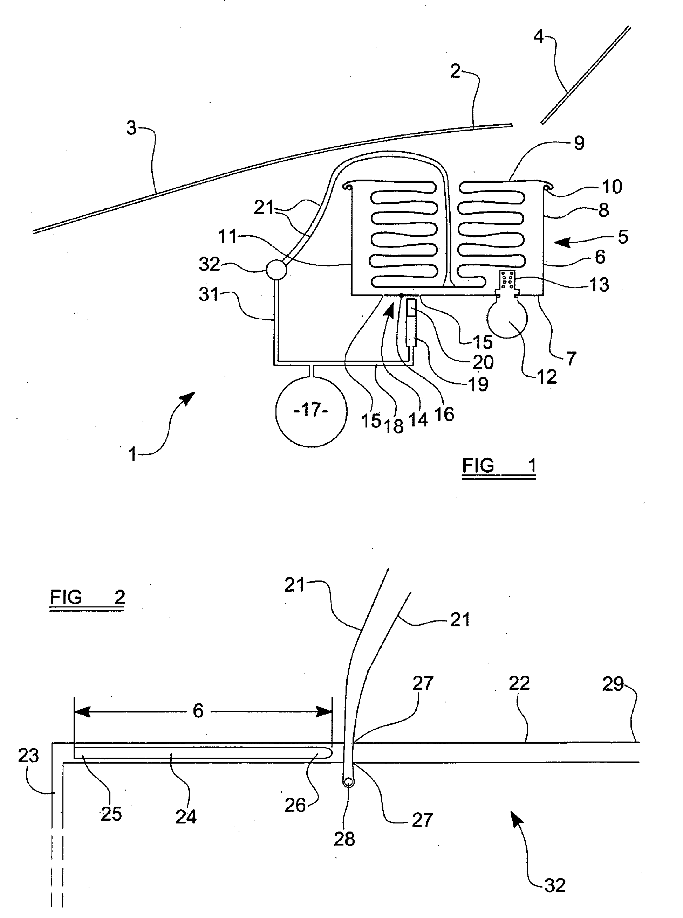

With reference firstly to figure 1, components of an air-bag arrangement 1 are shown schematically. The air-bag arrangement 1 is provided beneath the rear end 2 of a vehicle bonnet 3, near the bottom edge of the vehicle's windscreen 4. In certain embodiments the air-bag arrangement is mounted directly to the bonnet 3 itself.

The air-bag arrangement 1 comprises an air-bag module 5, including a housing 6 having a lower wall 7 and upstanding side walls 8. An air-bag 9 is folded tightly within the housing 6, and is attached at its edges, by seals 10, to the upper edges of the side walls 8 of the housing 6. It will therefore be understood that the air-bag 9 and housing 5 comprise a hybrid air-bag, in which a unitary space 11 is enclosed within the air-bag 9 and housing 5.

A first gas generator 12 is provided to generate gas, which may flow through a conduit passing through the lower wall 7 of the housing 6 to a diffuser 13 which is located within the housing 6. A venting door 14 is provided in the lower surface 7 of the housing 6. The venting door 14 is connected, at its edges 15, to the lower wall 7, so that, in its closed position, the venting door 14 forms part of the lower wall 7 and gas cannot escape from the housing 6 through the venting door 14. The connections at the edges 15 of the venting door 14 are, however, formed to be relatively weak.

The venting door 14 may pivot around a central pivot axis 16, for instance by means of a pivot pin (not shown) passing through the venting door 14.

A second gas generator 17 is also provided. Like the first gas generator 12, the second gas generator 16 is adapted to generate pressurised gas when it is triggered.

The second gas generator 17 is connected to a first gas conduit 18, which is connected to a cylinder 19. A piston 20 is located within the cylinder 19, and is adapted to be driven from a distal end of the cylinder 19 when pressurised gas is delivered to the cylinder 19. The cylinder 19 is arranged so that, when the piston 20 is driven from the distal end of the cylinder 19, the piston 20 will strike one side of the venting door 14.

The second gas generator 17 is also connected to a second gas conduit 31, which is connected to a retractor 32. Two tethers 21 are attached to external regions of the air-bag 9, as will be described in greater detail below, and are connected to the retractor 32. The retractor 32 is adapted, when pressurised gas is delivered to it, to draw the tethers 21 into the retractor 32.

In practical embodiments a cover would likely be placed over the top of the air-bag module 5 in its initial state. In the figures this cover has been omitted for the purposes of clarity, however.

The first and second gas generators 12, 17 are connected to one or more vehicle control units (not shown), which are operable to trigger the first and second gas generators 12, 17 when required.

A schematic view of one potential design of retractor 32 is shown in figure 2. The retractor 32 comprises a generally cylindrical, hollow tube 22 which has an inlet conduit 23 at one end. An elongate drive member 24, whose length is slightly less than half of the total length of the tube 22, is provided within the tube 22 and is initially located with its rear end 25 close to the inlet conduit and its front end 26 close to the centre of the tube 22.

A pair of opposing apertures 27 are formed though the tube 22 at or near the middle of its length. The tethers 21 pass through a first one of the apertures 27, across the internal diameter of the tube 22, and out of the other of the apertures 27, where they are both fixed to a fixing point 28.

When the retractor 32 is to be activated, pressurised gas is delivered into the interior of the tube 22 through the inlet conduit 23. This results in high gas pressure behind the rear end 25 of the drive member 24, and the drive member 24 therefore moves forwardly towards the far end 29 of the tube 22. As it does so the two tethers 21 are wrapped around the front end 26 of the drive member 24, and are drawn rapidly into the tube 22. It will be understood that, if the drive member 24 travels a sufficient distance that its front end 26 lies near the far end 29 of the tube 22, then each of the tethers 21 will be drawn into the tube 22 by a length approximately equal to twice the length I of the drive member 24.

A skilled person would appreciate that many other retraction mechanisms, powered by compressed gas, are possible and may be used with the present invention.

Use of the air-bag arrangement 1 will now be described.

When vehicle sensors detect that a collision with a pedestrian is occurring, or is likely to occur, the first gas generator 12 is triggered in the first instance. High pressure gas is delivered into the interior of the housing 6 through the diffuser 13, inflating the air-bag 9. The air-bag 9 rapidly inflates upwardly to cover at least a lower portion of the windscreen 4, and the rear edge 2 of the bonnet 3 may be lifted upwardly as this occurs. At this stage the second gas generator 17 is not triggered.

After a time it is determined that the air-bag 9 no longer needs to remain deployed. This may be because a certain length of time has elapsed following the triggering of the air-bag 9, or because a certain length of time has elapsed since a collision with a pedestrian (in preferred embodiments this length of time may be between 100 and 300 ms), or any other criteria that might be applicable.

When this determination is made, the second gas generator 17 is triggered. Pressurised gas is delivered from the second gas generator 17, through the first gas conduit 18 to the cylinder 19. The piston 20 will be driven upwardly, contacting the underside of the venting door 14 and causing the venting door 14 to pivot around its pivot axis16, breaking the connections at the edges15 of the venting door 14 as this occurs. This will open a gas flow path 30 allowing gas to escape from the interior of the container 6, in turn allowing the air-bag 9 to deflate rapidly.

Compressed gas from the second gas generator 17 will also pass through the second gas conduit 19 to the retractor 32, causing the two tethers 21 to be drawn rapidly into the retractor 32. These tethers 21 will therefore drag the air-bag 9 downwardly towards the retractor 32, and hence away from the windscreen 4, completely or partially removing the air-bag 9 from the windscreen 4 so that the view of the driver of the vehicle is unobstructed (or less obstructed) by the air-bag 9.

In preferred embodiments of the invention some or all of the tethers 21 are attached to regions of the air-bag 9 which, when the air-bag 9 if inflated, are at or near the top of the air-bag 9, so that the air-bag 9 is drawn downward effectively when the retractor 32 is activated.

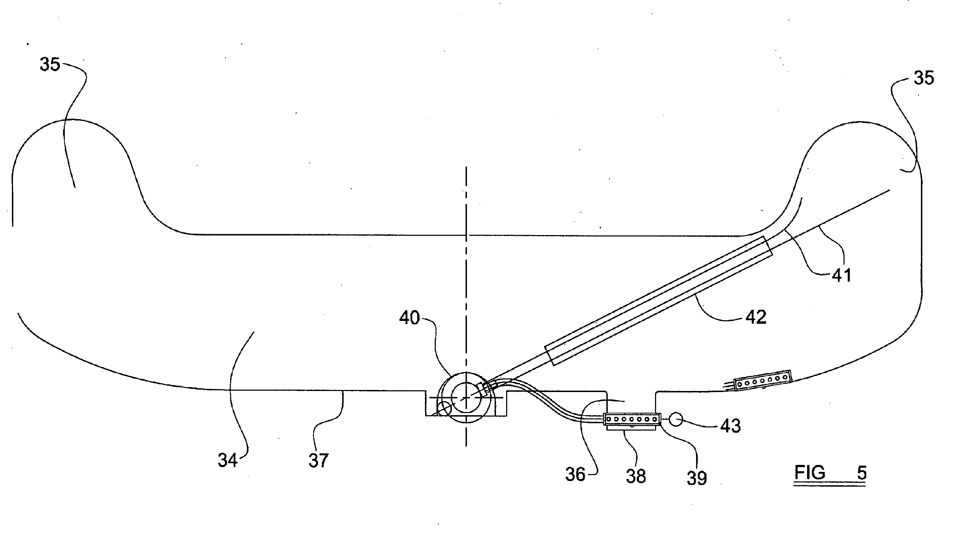

Turning to figure 5, components of a further embodiment of the invention are shown schematically. A pedestrian protection air-bag 33 is shown in an inflated state. The air-bag 33 has a main portion 34, which is positioned to cover a lower region of a vehicle's windscreen (not shown), and left and right side portions 35, which are positioned to cover the A-pillars of the vehicle (not shown).

A venting trunk 36 protrudes from the lower edge 37 of the main portion 34, and has an open end 38, thus providing a gas flow path from the interior of the air-bag 33 to its surroundings. However, the open end 38 is initially closed by a clamp 39, which holds the sides of the open end 38 together and prevents gas from escaping through the gas flow path.

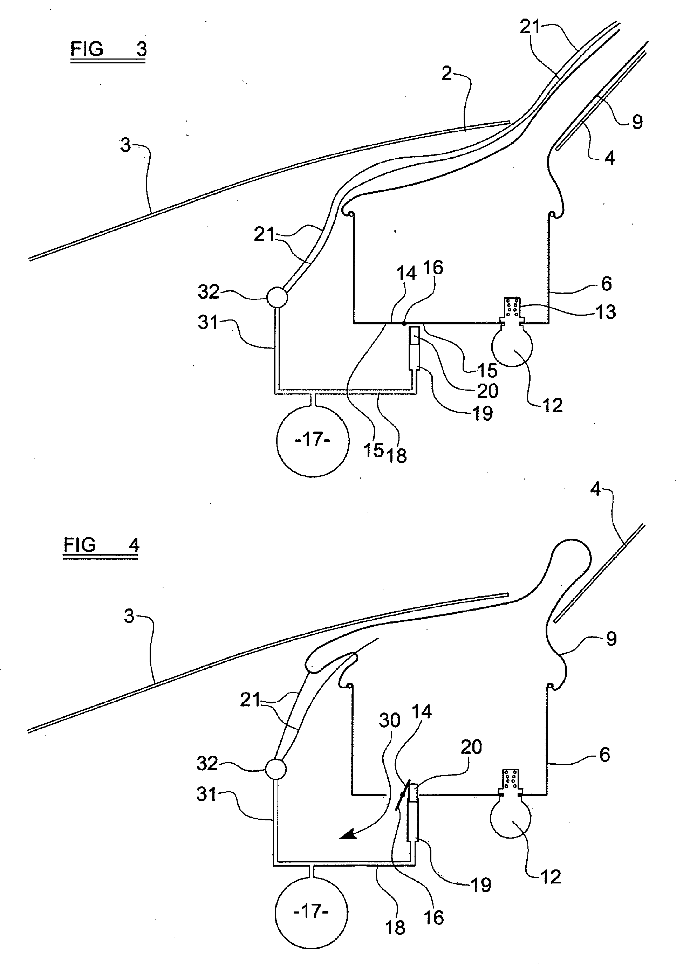

A retractor 40 is provided at a central region of the air-bag 33. Two tethers 41 are connected to the retractor and to peripheral regions of the air-bag 33, passing through a guide 42 as they do so. Only two tethers 41 are shown in figure 3, but the skilled reader will understand that any suitable number of tethers may be provided.

A pyrotechnic gas generator 43 is provided, and as the skilled reader will understand, this may be activated to generate large quantities of gas rapidly. In this specification, the use of gas generators comprising sources of compressed gas and pyrotechnic charges are described, and it should be understood that these two types of gas generator (and indeed any other suitable type of gas generator) may be used with embodiments of the invention. When a pyrotechnic gas generator is used, gas is usually produced very rapidly under high pressure, and has the potential to damage components. For this reason it may be preferable to use regulating nozzles to direct the gas produced by a pyrotechnic gas generator.

The pyrotechnic gas generator 43 is connected to supply gas, when activated, to the clamp 39. The clamp 39 is adapted to open when pressurised gas is supplied to it, and this may be achieved, for example, by providing a retaining pin which holds two opposing sides of the clamp together, which is driven out of position by a jet of the pressurised gas, or by a piston which is driven by the pressurised gas. The skilled reader will readily appreciate how this may be achieved.

A conduit 44 is provided to transport pressured gas from the clamp 39 to the retractor 40. The retractor 40 comprises a spring which is pre-loaded, and which is held in the pre-loaded state by a retaining mechanism (not shown), such as a retaining pin. A spindle (not shown) is provided within the retractor 40, and is adapted to be driven rotationally by the spring.

When pressurised gas is provided to the retractor 40 through the conduit 44, the retaining mechanism is released. This may be achieved, as discussed above, by arranging for the retaining pin to be driven out of position by a jet of the pressurised gas, or by a piston which is driven by the pressurised gas. Once again the skilled reader will readily be able to appreciate alternative ways in which this may be effected.

When the retaining mechanism is released, the spring drives the spindle to rotate, and as this occurs the tethers 41 are wound onto the spindle, thus drawing the peripheral regions of the air-bag 33 towards the retractor 40, and at least partially removing the air-bag 33 from the vehicle's windscreen.

It will therefore be understood that, when the pyrotechnic gas generator 43 is activated, pressurised gas will flow through the clamp 39, releasing the clamp 39, and then to the retractor 40, causing the retractor 40 to draw in the tethers 41. It should be understood that the clamp 39 and retractor 40 need not be activated in this order, and pressurised gas could flow to the retractor 40 first, and then to the clamp 39, or indeed to the clamp 39 and retractor separately.

In general, the power to drive a retractor may be provided by the pressurised gas that is delivered to the retractor, or may be provided by stored energy, for example in a spring element, that is released by a mechanism that is triggered by the pressurised gas. Either type of retractor may be used in embodiments of the invention.

It will be appreciated that providing a single gas generator 17 which is connected to an active venting arrangement 19,20 for the air-bag 9, as well as to a retractor 32 connected to the air-bag 9, will allow the air-bag 9 to be quickly and effectively retracted. The deflation and retraction of the air-bag 9 are likely to be required at the same moment, and using a single source of compressed gas to drive both of these processes reduces the overall number of components and ensures that the active venting and retraction of the air-bag 9 happen at the same time, thus reducing the possibility of timing errors.

As mentioned above there are many types of active ventilation and retraction systems which can be driven by the delivery of compressed gas, and any of these may be used with the present invention.

While the discussion above focuses on a gas generator to drive the active ventilation and retraction of the air-bag 9, the invention is not limited to this, and any suitable system may be used to drive these components. For instance, it is envisaged that hydraulic, solenoid or pyrotechnic systems may be used to drive both the active ventilation and retraction systems, and a skilled person will readily understand how each of these types of system may be used.

In this specification the term "driving arrangement" refers to a single force-generating system that operates the active venting and retraction system, and does not refer, for example, to an arrangement of two gas generators, one each of which operates the active ventilation and retraction systems.

It will be appreciated that the present invention provides a robust and flexible system which will find utility with many different types of air-bag, both external pedestrian protection air-bags and internal driver/passenger protection air-bags.

## Claims

1. A safety arrangement for a vehicle, comprising:
an air-bag module (5) having an inflatable air-bag (9, 33), the air-bag (9, 33) being configured to occupy an initial position following inflation thereof;
an inflator (12) adapted to deliver gas into the interior of the air-bag (9, 33) to inflate the air-bag (9, 33);
an active venting arrangement (14, 19; 39) movable between a closed configuration and an open configuration, and which, in the open configuration, opens a gas flow passage (30, 38) between the interior of the air-bag (9, 33) and the exterior of the air-bag (9, 33), thus allowing gas to escape from the airbag (9, 33);
a moving arrangement (32, 21; 40, 41) adapted to move the air-bag (9, 33) from its initial position following inflation of the air-bag (9, 33); and
a driving arrangement (17, 43), which is connected to the active venting arrangement (14, 19; 39) and to the moving arrangement (32, 21; 40, 41) and which, when triggered, moves the active venting arrangement (14, 19; 39) from the closed position to the open position and also triggers the moving arrangement (32, 21; 40, 41) to remove the air-bag (9, 33) from its initial position, wherein the driving arrangement (17, 43) comprises a source of pressurised gas, and wherein the active venting arrangement (14, 19; 39) and the moving arrangement (32, 21; 40, 41) are connected to receive gas from the source of pressurised gas.

2. A safety arrangement according to claim 1, wherein the active venting arrangement (14, 19) comprises a component (20) which is driven from an initial position to a final position by the pressurised gas, to move the active venting arrangement (14, 19) from the closed configuration to the open configuration.

3. A safety arrangement according to claim 1, wherein the moving arrangement (32, 21; 40, 41) comprises one or more flexible elements (21, 41) which are attached to the air-bag (9, 33).

4. A safety arrangement according to claim 3, wherein the or each flexible element (21, 41) is drawn inwardly into another component of the moving arrangement (32, 21; 40, 41) when the moving arrangement (32, 21; 40, 41) is activated.

5. A safety arrangement according to any preceding claim, wherein the air-bag (9, 33) is a pedestrian protection air-bag.

6. A safety arrangement according to any one of claims 1 to 4, wherein the air-bag is a driver or passenger protection air-bag.

7. A safety arrangement according to any preceding claim further comprising a control unit which is adapted to generate a first trigger signal at a first time to inflate the air-bag (9, 33), and a second trigger signal at a second time to trigger the driving arrangement (17, 43), the second time being later than the first time.

8. A safety arrangement according to claim 7, wherein the first trigger signal is generated if it is determined that an impact or accident is occurring or is likely to occur.

9. A safety arrangement according to claim 7 or 8, wherein the second trigger signal is generated when it is determined that the air-bag (9, 33) is no longer required.

10. A safety arrangement according to claim 9, wherein the second trigger signal is generated at a predetermined length of time after the first trigger signal.

11. A safety arrangement according to any preceding claim, wherein the driving arrangement (17, 43) comprises a hydraulic, solenoid or pyrotechnic system.

12. A vehicle containing a safety arrangement according to any preceding claim.

## Patentansprüche

1. Sicherheitsanordnung für ein Fahrzeug, umfassend:
ein Airbagmodul (5) mit einem aufblasbaren Airbag (9, 33), wobei der Airbag (9, 33) so eingerichtet ist, dass er nach dem Aufblasen davon eine Ausgangsstellung einnimmt;
einen Gasgenerator (12), der so ausgelegt ist, dass er zum Aufblasen des Airbags (9, 33) Gas ins Innere des Airbags (9, 33) abgibt;
eine Anordnung zur aktiven Entlüftung (14, 19; 39), die zwischen einer geschlossenen Gestalt und einer offenen Gestalt bewegbar ist, und die, in der offenen Gestalt, einen Gasströmungskanal (30, 38) zwischen dem Inneren des Airbags (9, 33) und der Außenumgebung des Airbags (9, 33) öffnet, wodurch sie ermöglicht, dass Gas aus dem Airbag (9, 33) strömt;
eine Bewegungsanordnung (32, 21; 40, 41), die so ausgelegt ist, dass sie den Airbag (9, 33) nach dem Aufblasen des Airbags (9, 33) aus seiner Ausgangsstellung bewegt; und
eine Antriebsanordnung (17, 43), die mit der Anordnung zur aktiven Entlüftung (14, 19; 39) und mit der Bewegungsanordnung (32, 21; 40, 41) verbunden ist und die, wenn sie ausgelöst ist, die Anordnung zur aktiven Entlüftung (14, 19; 39) aus der geschlossenen Stellung in die offene Stellung bewegt und auch veranlasst, dass die Bewegungsanordnung (32, 21; 40, 41) den Airbag (9, 33) aus seiner Ausgangsstellung wegbewegt, wobei die Antriebsanordnung (17, 43) eine Quelle für Druckgas umfasst und wobei die Anordnung zur aktiven Entlüftung (14, 19; 39) und die Bewegungsanordnung (32, 21; 40, 41) verbunden sind und so Gas aus der Quelle für Druckgas aufnehmen.

2. Sicherheitsanordnung nach Anspruch 1, wobei die Anordnung zur aktiven Entlüftung (14, 19) einen Bestandteil (20) umfasst, der von dem Druckgas aus einer Ausgangsstellung in eine Endstellung angetrieben wird, damit er die Anordnung zur aktiven Entlüftung (14, 19) aus der geschlossenen Gestalt in die offene Gestalt bewegt.

3. Sicherheitsanordnung nach Anspruch 1, wobei die Bewegungsanordnung (32, 21; 40, 41) ein oder mehrere flexible Elemente (21, 41) umfasst, die an dem Airbag (9, 33) befestigt sind.

4. Sicherheitsanordnung nach Anspruch 3, wobei das oder jedes flexible Element (21, 41) in einen anderen Bestandteil der Bewegungsanordnung (32, 21; 40, 41) hineingezogen wird, wenn die Bewegungsanordnung (32, 21; 40, 41) aktiviert wird.

5. Sicherheitsanordnung nach einem vorhergehenden Anspruch, wobei es sich bei dem Airbag (9, 33) um einen Fußgängerschutzairbag handelt.

6. Sicherheitsanordnung nach einem der Ansprüche 1 bis 4, wobei es sich bei dem Airbag um einen Fahrer- oder Beifahrerschutzairbag handelt.

7. Sicherheitsanordnung nach einem vorhergehenden Anspruch, die ferner eine Steuereinheit umfasst, die so ausgelegt ist, dass sie zu einem ersten Zeitpunkt ein erstes Auslösesignal zum Aufblasen des Airbags (9, 33) erzeugt und zu einem zweiten Zeitpunkt ein zweites Auslösesignal zum Auslösen der Antriebsanordnung (17, 43), wobei der zweite Zeitpunkt später liegt als der erste Zeitpunkt.

8. Sicherheitsanordnung nach Anspruch 7, wobei das erste Auslösesignal erzeugt wird, wenn ermittelt wird, dass sich ein Aufprall oder Unfall ereignet oder wahrscheinlich ereignen wird.

9. Sicherheitsanordnung nach Anspruch 7 oder 8, wobei das zweite Auslösesignal erzeugt wird, wenn ermittelt wird, dass der Airbag (9, 33) nicht länger benötigt wird.

10. Sicherheitsanordnung nach Anspruch 9, wobei das zweite Auslösesignal eine vorher festgelegte Zeitdauer nach dem ersten Auslösesignal erzeugt wird.

11. Sicherheitsanordnung nach einem vorhergehenden Anspruch, wobei die Antriebsanordnung (17, 43) ein hydraulisches, magnetisches oder pyrotechnisches System umfasst.

12. Fahrzeug, das eine Sicherheitsanordnung nach einem vorhergehenden Anspruch enthält.

## Revendications

1. Agencement de sécurité pour un véhicule, comprenant :
un module d'airbag (5) comportant un airbag gonflable (9, 33), l'airbag (9, 33) étant configuré pour occuper une position initiale après son gonflage ;
un gonfleur (12) adapté pour émettre du gaz dans l'intérieur de l'airbag (9, 33) afin de gonfler l'airbag (9, 33) ;
un agencement d'évacuation active (14, 19 ; 39) mobile entre une configuration fermée et une configuration ouverte, et qui, dans la configuration ouverte, ouvre un passage d'écoulement de gaz (30, 38) entre l'intérieur de l'airbag (9, 33) et l'extérieur de l'airbag (9, 33), permettant ainsi à du gaz de s'échapper de l'airbag (9, 33) ;
un agencement de déplacement (32, 21 ; 40, 41) adapté pour déplacer l'airbag (9, 33) de sa position initiale après le gonflage de l'airbag (9, 33) ; et
un agencement d'entraînement (17, 43), qui est relié à l'agencement d'évacuation active (14, 19 ; 39) et à l'agencement de déplacement (32, 21 ; 40, 41) et qui, quand il est déclenché, déplace l'agencement d'évacuation active (14, 19 ; 39) de la position fermée à la position ouverte et déclenche également l'agencement de déplacement (32, 21 ; 40, 41) pour retirer l'airbag (9, 33) de sa position initiale, l'agencement d'entraînement (17, 43) comprenant une source de gaz sous pression, et l'agencement d'évacuation active (14, 19 ; 39) et l'agencement de déplacement (32, 21 ; 40, 41) étant reliés pour recevoir du gaz de la source de gaz sous pression.

2. Agencement de sécurité selon la revendication 1, dans lequel l'agencement d'évacuation active (14, 19) comprend un composant (20) qui est entraîné d'une position initiale à une position finale par le gaz sous pression, pour déplacer l'agencement d'évacuation active (14, 19) de la configuration fermée à la configuration ouverte.

3. Agencement de sécurité selon la revendication 1, dans lequel l'agencement de déplacement (32, 21 ; 40, 41) comprend un ou plusieurs éléments souples (21, 41) qui sont attachés à l'airbag (9, 33).

4. Agencement de sécurité selon la revendication 3, dans lequel le ou chaque élément souple (21, 41) est tiré vers l'intérieur dans un autre composant de l'agencement de déplacement (32, 21 ; 40, 41) quand l'agencement de déplacement (32, 21 ; 40, 41) est activé.

5. Agencement de sécurité selon une quelconque revendication précédente, dans lequel l'airbag (9, 33) est un airbag de protection pour piéton.

6. Agencement de sécurité selon l'une quelconque des revendications 1 à 4, dans lequel l'airbag est un airbag de protection pour conducteur ou passager.

7. Agencement de sécurité selon une quelconque revendication précédente, comprenant en outre une unité de commande qui est adaptée pour générer un premier signal de déclenchement à un premier moment pour gonfler l'airbag (9, 33), et un second signal de déclenchement à un second moment pour déclencher l'agencement d'entraînement (17, 43), le second moment étant plus tard que le premier moment.

8. Agencement de sécurité selon la revendication 7, dans lequel le premier signal de déclenchement est généré s'il est déterminé qu'un impact ou accident se produit ou est susceptible de se produire.

9. Agencement de sécurité selon la revendication 7 ou 8, dans lequel le second signal de déclenchement est généré quand il est déterminé que l'airbag (9, 33) n'est plus nécessaire.

10. Agencement de sécurité selon la revendication 9, dans lequel le second signal de déclenchement est généré une période prédéterminée après le premier signal de déclenchement.

11. Agencement de sécurité selon une quelconque revendication précédente, l'agencement d'entraînement (17, 43) comprenant un système hydraulique, solénoïdal ou pyrotechnique.

12. Véhicule contenant un agencement de sécurité selon une quelconque revendication précédente.
